# DEMANDE DE BREVET EUROPEEN

(11) **EP 1 234 650 A1**
(43) Date de publication de la demande: **28.08.2002**
(21) Numéro de dépôt: 02290427.0
(22) Date de dépôt: 21.02.2002
(51) Int. Cl.: B29C 45/14, B68G 7/08

(54) **Procédé de préparation de dispositifs utilisés pour le capitonnage de garniture de rembourrage**

(30) Priorité: 21.02.2001 FR 0102348
(71) Demandeur: DELAHOUSSE ET FILS, 49320 Vauchrétien (FR)
(72) Inventeur: Delahousse, Marc, 49000 Angers (FR); Delahousse, David, 49100 Angers (FR)
(74) Mandataire: Catherine, Alain

(57) **Abrégé**

Le procédé de préparation des capitons, qui sont constitués d'un galon (1) et de barrettes (2) surmoulées à chaque extrémité, consiste à façonner dans un moule multi empreintes, c'est-à-dire un moule susceptible de réaliser plusieurs barrettes (2), un lien (3) sécable, disposé entre deux barrettes adjacentes, lequel lien est réalisé simultanément à l'injection de la matière plastique dans le moule.

Ce lien (3) est constitué d'un simple point de matière et il se situe sur l'axe des barrettes (2).

## Description

La présente invention concerne un procédé de préparation de dispositifs utilisés pour le capitonnage de garniture de rembourrage et elle concerne également les dispositifs obtenus, encore appelés capitons, par la mise en oeuvre du procédé.

Ces dispositifs ou capitons, utilisés pour le capitonnage de garniture de rembourrage pour sièges ou matelas, sont constitués d'un galon de quelques centimètres de longueur muni à l'une au moins de ses extrémités, d'une barrette transversale réalisée en matériau thermoplastique. Ces barrettes sont surmoulées sur le galon, à chacune de ses extrémités, façonnées par injection dans un moule approprié qui enserre le galon.

Généralement, les moules comportent plusieurs empreintes qui permettent de réaliser simultanément plusieurs barrettes.

La pose de ces capitons s'effectue manuellement, au moyen d'une aiguille appropriée qui comporte un logement pour l'une des barrettes et qui est enfoncée par l'opérateur à travers la garniture.

Cette opération manuelle étant particulièrement pénible, il est apparu des machines de pose semi-automatiques comportant de nombreuses aiguilles fixées à un bâti qui perforent simultanément le matelas.
Dans le cas de l'utilisation d'une telle machine, le chargement du capiton s'opère toujours manuellement dans chaque logement d'aiguille.

Il est apparu qu'un autre système mécanique pouvait être développé sur le principe d'une seule aiguille mobile circulant sur un bâti.
Dans ce cas, l'aiguille est munie d'un chargeur contenant plusieurs capitons.

La présente invention propose un perfectionnement au procédé de préparation des capitons qui permet de faciliter cette opération de chargement.

Le procédé de préparation de ces capitons consiste à façonner, dans un moule multi empreintes, c'est-à-dire dans un moule susceptible de réaliser plusieurs barrettes en une seule injection, un lien sécable qui s'étend entre deux barrettes adjacentes, lequel lien est façonné simultanément à l'injection du matériau constitutif dans les moules à barrettes.

L'invention concerne également la grappe de capitons obtenus par la mise en oeuvre du procédé.

Toujours selon l'invention, les liens réalisés entre deux barrettes, sont de préférence centrés sur l'axe desdites barrettes.

Selon une autre disposition préférentielle de l'invention, le lien entre les barrettes est constitué d'un simple point de matière injectée.

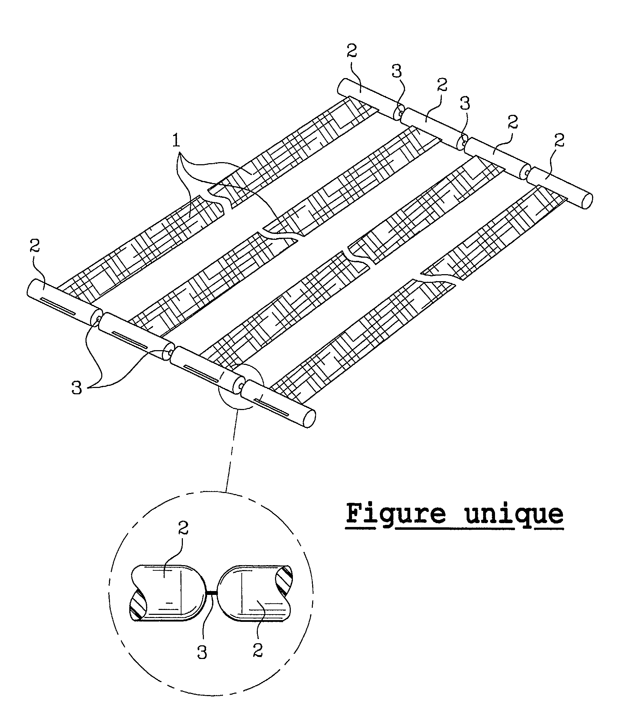

L'invention sera encore détaillée à l'aide de la description suivante et de la figure annexée qui montre, schématiquement, une grappe de capitons, obtenue par la mise en oeuvre du procédé selon l'invention, avec, d'une façon plus détaillée, une représentation du lien qui s'étend entre deux barrettes adjacentes.

La grappe telle que schématisée sur la figure est par exemple constituée de quatre capitons.

Chaque capiton est constitué d'un galon 1 muni à chacune de ses extrémités d'une barrette 2 réalisée en matériau thermoplastique. Ces barrettes 2 sont surmoulées sur le galon 1.

Généralement, un moule qui permet la réalisation de ces barrettes 2 par injection, comporte plusieurs empreintes pour réaliser par exemple quatre barrettes adjacentes.

Pour réaliser cette grappe de capitons, comme représenté sur la figure, le moule est aménagé pour permettre la réalisation d'un lien 3 entre deux barrettes adjacentes. Ce lien 3 est réalisé avec le matériau thermoplastique des barrettes 2, simultanément à l'injection de la matière plastique dans le moule multi empreintes.

Ce lien 3 est constitué d'un simple point de matière plastique. Il est facilement sécable pour permettre une séparation des capitons.

La présentation des capitons en forme de grappe, comme représenté sur la figure, permet, lorsque ces capitons sont posés de façon mécanique, de faciliter leur insertion dans un chargeur.

Ce lien peut être réalisé de différentes manières entre les barrettes. Comme représenté sur la figure, ce lien 3 est de préférence disposé sur l'axe central des barrettes 2, et s'étend entre les faces d'extrémités en vis-à-vis de deux barrettes adjacentes.

## Revendications

1. Procédé de préparation de capitons constitués d'un galon (1) muni à l'une au moins de ses extrémités d'une barrette transversale (2) réalisée en matériau thermoplastique, laquelle barrette (2) est surmoulée sur ledit galon, **caractérisé en ce qu'**il consiste à façonner, dans un moule multi empreintes c'est-à-dire un moule susceptible de réaliser plusieurs barrettes en une seule injection, un lien (3) sécable, qui s'étend entre deux barrettes adjacentes, lequel lien est réalisé simultanément à l'injection du matériau constitutif desdites barrettes.

2. Grappe de capitons, obtenue par la mise en oeuvre du procédé selon la revendication 1, **caractérisée en ce qu'**elle est constituée de barrettes (2) reliées entre elles par un lien sécable (3).

3. Grappe selon la revendication 2, **caractérisée en ce que** les liens (3) sont situés sur l'axe des barrettes (2).

4. Grappe selon l'une quelconque des revendications 2 ou 3, **caractérisée en ce que** le lien (3) est constitué d'un simple point de matière plastique.
